# FASCICULE DE BREVET EUROPEEN

(11) **EP 1 569 842 B1**
(45) Date de publication et mention de la délivrance du brevet: **02.08.2006**
(21) Numéro de dépôt: 03796178.6
(22) Date de dépôt: 05.12.2003
(51) Int. Cl.: B62K 21/06, B62K 19/16

(54) **ASSEMBLAGE D'UNE FOURCHE DE BICYCLETTE ET D'UN JEU DE DIRECTION SUR UN CADRE DE BICYCLETTE, ET FOURCHE POUR UN TEL ASSEMBLAGE.**
FAHRRADGABELZUSAMMENBAU UND LENKKOPF AUF EINEM FAHRRADRAHMEN UND GABEL FÜR EINEN SOLCHEN ZUSAMMENBAU
ASSEMBLY COMPRISING A BICYCLE FORK AND A HEADSET ON A BICYCLE FRAME AND FORK FOR ONE SUCH ASSEMBLY

(30) Priorité: 12.12.2002 FR 0215694
(43) Date de publication de la demande: 07.09.2005
(73) Titulaire: TIME SPORT INTERNATIONAL, 58 640 Varennes-Vauzelles (FR)
(72) Inventeur: GUEUGNEAUD, Jean-Marc, F-38110 St Clair de La Tour (FR)
(74) Mandataire: Michardière, Bernard
(86) Numéro de dépôt international: PCT/FR2003/003607
(87) Numéro de publication internationale: WO 2004/062995

(56) Documents cités:
- EP-A- 0 690 241
- FR-A- 2 384 668
- US-A- 5 291 797

## Description

L'invention est relative à un assemblage d'une fourche de bicyclette et d'un jeu de direction sur une colonne de direction de cadre de bicyclette, la fourche étant solidaire d'un pivot qui se prolonge au-delà de l'extrémité de la colonne de direction éloignée de la fourche pour permettre la fixation d'une potence par serrage extérieur du pivot, le jeu de direction comportant un roulement inférieur et un roulement supérieur disposés entre le pivot et la colonne, tandis qu'un moyen de réglage du serrage axial du jeu de direction est prévu.

Un assemblage de ce genre, connu sous le nom de "aheadset", est basé sur le principe du maintien de l'ensemble roulement / fourche par blocage de la potence sur le pivot de fourche. Un exemple est montré par FR 2 815 928 au nom de la même société déposante.

Ce principe possède des avantages en terme de rigidité de la liaison, de légèreté, d'usage de nouveaux matériaux, notamment matériaux composites, par rapport à la solution qui consistait à introduire une tige de potence à l'intérieur du pivot et à bloquer la tige dans le pivot par un dispositif à expansion. Toutefois, ces assemblages sont délicats à réaliser, notamment concernant le réglage du jeu de direction.

En effet, dans les assemblages connus de type "aheadset", pour régler le serrage axial du jeu de direction on utilise une poussée axiale à partir d'un manchon solidaire de la potence. Or, la position de la potence et de son manchon, suivant la direction axiale du pivot, dépend de la morphologie et des souhaits du cycliste ; cette position ne peut donc être réglée au préalable en usine en l'absence du cycliste utilisateur. Il appartient donc au détaillant spécialisé d'effectuer le montage en fonction de l'utilisateur. Le détaillant doit ainsi effectuer le réglage du serrage du jeu de direction, après assemblage des composants et mise en place de la potence.

Cette opération relativement délicate est souvent très provisoire car l'utilisateur peut vouloir modifier sa position sur la bicyclette et changer le réglage de la potence. Chaque action sur la potence a pour effet de dérégler le jeu de direction dans les assemblages connus, de sorte qu'un nouveau réglage du jeu de direction doit être effectué.

US-A-5 291 797 décrit un assemblage de fourche de bicyclette selon lequel le pivot comporte, dans la région de l'extrémité de la colonne de direction éloignée de la fourche, sur sa surface extérieure une zone munie de premiers moyens de liaison, le prolongement du pivot du côté opposé à la fourche étant dépourvu de tels moyens de liaison. Une douille munie de deuxièmes moyens de liaison, complémentaires de ceux du pivot, est prévue pour permettre un réglage du serrage axial du jeu de direction par coopération avec les premiers moyens de liaison. Les premiers moyens de liaison sont formés par un manchon fendu longitudinalement, bloqué par pincement contre le pivot. Il peut en résulter des dommages à la surface du pivot, en particulier lorsqu'il est réalisé en matériau composite.

L'invention a pour but, surtout, de fournir un assemblage du genre défini précédemment qui permet d'éviter de causer des dommages à la surface du pivot dans la zone des premiers moyens de liaison. L'assemblage doit en outre permettre de régler le jeu de direction en usine indépendamment de la position de la potence, de telle sorte que le détaillant n'ait pas à intervenir sur le jeu de direction lors du montage de la bicyclette. En outre il est souhaitable que le cycliste utilisateur puisse modifier le réglage de potence sans dérégler le jeu de direction.

Selon l'invention, un assemblage de fourche de bicyclette et de jeu de direction sur une colonne de direction de cadre de bicyclette, du genre défini précédemment, et dans lequel:
- le pivot comporte, dans la région de l'extrémité de la colonne de direction éloignée de la fourche, sur sa surface extérieure une zone munie de premiers moyens de liaison, le prolongement du pivot du côté opposé à la fourche étant dépourvu de tels moyens de liaison,
- et une douille munie de deuxièmes moyens de liaison, complémentaires de ceux du pivot, est prévue pour permettre un réglage du serrage axial du jeu de direction par coopération avec les premiers moyens de liaison,
   est caractérisé par le fait que la zone du pivot munie des premiers moyens de liaison est constituée par une bague de longueur déterminée enfilée autour du pivot et que la bague est fixée par collage au pivot.

La bague peut comporter un filetage extérieur constituant les premiers moyens de liaison.

Les deuxièmes moyens de liaison peuvent être formés par un filetage interne prévu sur la douille et conjugué de celui de la bague.

Le pivot peut être en matériau composite et la bague rapportée peut être métallique.

La douille est avantageusement formée par une cuvette de direction. Un frein anti-rotation peut être prévu entre la douille et le pivot. Ce frein peut être constitué par un joint torique.

La longueur de la bague filetée peut être d'environ 1 cm.

En variante, la longueur axiale de la bague filetée, ou plus généralement de la zone munie des premiers moyens de liaison, est suffisante pour permettre d'assurer un serrage et un réglage du jeu de direction avec différentes hauteurs de la colonne de direction.

L'invention concerne également une fourche pour un tel assemblage, cette fourche étant solidaire d'un pivot qui se prolonge pour permettre la fixation d'une potence par serrage extérieur du pivot, comportant, dans une région éloignée de la fourche, sur sa surface extérieure une zone munie de premiers moyens de liaison, le prolongement du pivot du côté opposé à la fourche étant dépourvu de tels moyens de liaison, caractérisée par le fait que la zone du pivot munie des premiers moyens de liaison est constituée par une bague de longueur déterminée enfilée autour du pivot et fixée par collage à ce dernier.

L'invention consiste, mises à part les dispositions exposées ci-dessus, en un certain nombre d'autres dispositions dont il sera plus explicitement question ci-après à propos d'un exemple de réalisation décrit en détail avec référence aux dessins annexés, mais qui n'est nullement limitatif.

Sur ces dessins :
Fig.1 est une vue en perspective avec parties arrachées d'un assemblage fourche - jeu de direction sur cadre de bicyclette, selon l'invention ;
Fig.2 est une vue éclatée en perspective des pièces de l'assemblage de Fig.1
Fig.3 est une coupe verticale en perspective à plus grande échelle de la cuvette de direction, et
Fig.4 montre, en perspective, la fourche et le pivot équipés de la cuvette de direction.

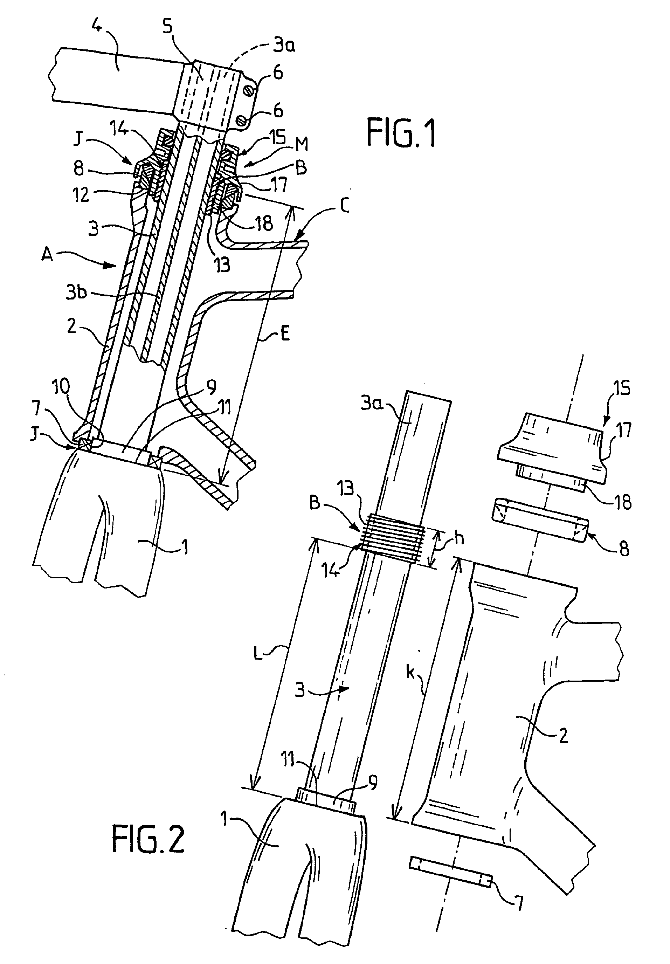

En se reportant à Fig.1 on peut voir un assemblage A d'une fourche 1 de bicyclette et d'un jeu de direction J sur une colonne de direction 2 de cadre C de bicyclette.

La fourche 1 est solidaire d'un pivot 3 qui se prolonge en 3a au-delà de l'extrémité de la colonne 2 éloignée de la fourche 1, c'est-à-dire au-delà de l'extrémité supérieure de la colonne 2 pour une bicyclette en position de roulement. La partie 3a du pivot 3 permet la fixation d'une potence 4, schématiquement et partiellement représentée, qui comporte à l'arrière un manchon 5 entourant le pivot 3. Le pivot 3 est cylindrique, en général à section transversale circulaire, de préférence de diamètre constant suivant la direction axiale au moins dans la zone de fixation de la potence. Le manchon 5 est généralement fendu à l'arrière suivant une génératrice, et comporte des moyens de serrage, en particulier des vis 6, permettant de bloquer la potence sur le pivot 3 par serrage extérieur du pivot 3. Le pivot peut comporter une ou plusieurs cloisons intérieures 3b de rigidification.

Le jeu de direction J comporte un roulement inférieur 7 et un roulement supérieur 8 disposés entre le pivot 3 et la colonne 2, et un moyen de réglage M du serrage axial du jeu de direction J.

Le roulement inférieur 7 est centré intérieurement sur une portée 9 du pivot et est disposé axialement entre un siège 10 usiné à la base de la colonne de direction et un épaulement 11 de la fourche 1. Le roulement supérieur 8 est disposé entre un siège 12 prévu à l'extrémité supérieure de la colonne 2 et le moyen M du serrage axial du jeu de direction J.

Le réglage du serrage axial du jeu de direction J et plus précisément des roulements 7 et 8, est obtenu par réglage de la cote E qui correspond à la distance entre l'épaulement 11 et la surface d'appui du moyen M contre le roulement supérieur 8.

Dans les dispositifs connus à ce jour, le serrage axial du jeu J est obtenu en prenant appui, le cas échéant avec interposition de cales, contre la partie inférieure du manchon 5 lorsque la potence a été réglée. Une modification de la position du manchon 5 dérègle donc le serrage axial du jeu de direction J.

Selon l'invention, le pivot 3 comporte, dans la région de l'extrémité de la colonne 2 éloignée de la fourche 1, sur sa surface extérieure, une zone B munie de premiers moyens de liaison avantageusement constitués par un filetage 13.

De préférence, la zone B est constituée par une bague 14 dont la surface extérieure est munie du filetage 13, et dont la surface intérieure cylindrique est lisse. Le diamètre intérieur de la bague 14 est égal au diamètre extérieur du pivot 3. La bague 14 est enfilée autour du pivot 3 et est fixée à ce dernier, notamment par collage.

La longueur axiale h de la bague 14 peut être d'environ 1cm, ce qui est suffisant pour un réglage du serrage correspondant à une hauteur de colonne 2 déterminée. On pourrait toutefois prévoir une longueur h plus importante qui permettrait d'assurer un réglage axial avec des colonnes de direction 2 de hauteurs différentes correspondant à des cadres C de dimensions différentes.

Le prolongement 3a du pivot du côté opposé à la fourche 1 comporte une surface extérieure lisse dépourvue de tout filetage.

Le pivot 3 peut être en matériau composite à base de fibres de carbone noyées dans une résine, tandis que la bague 14 est métallique. Bien entendu, le pivot 3 peut aussi être métallique, notamment en acier, ou en aluminium, ou en titane.

Une douille 15 munie de deuxièmes moyens de liaison, avantageusement constitués par un filetage 16 conjugué du filetage 13 du pivot, est prévue pour permettre le réglage du serrage axial du jeu de direction J par rotation de la douille 15 relativement au pivot 3.

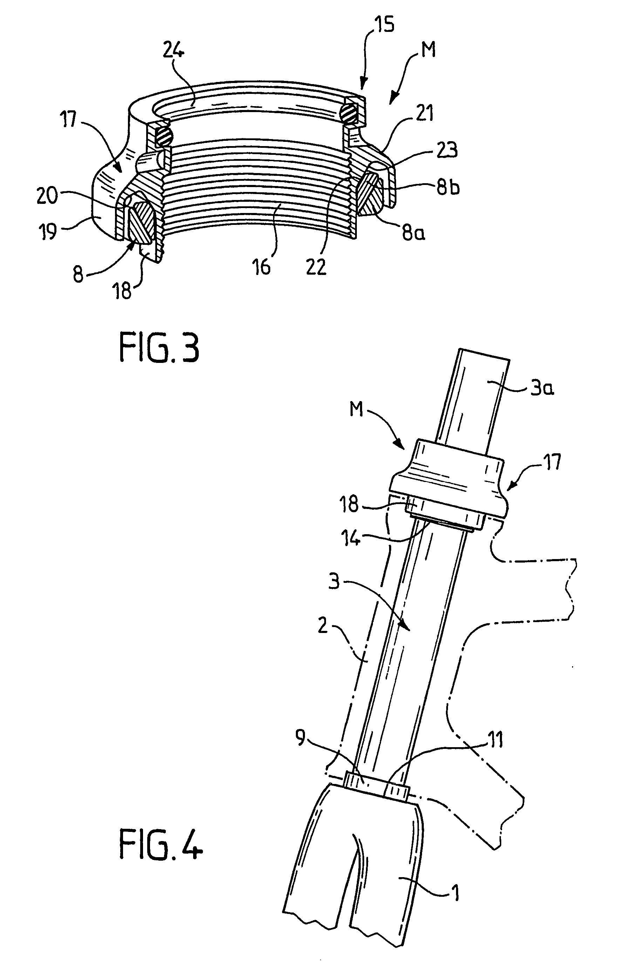

La douille 15 est constituée par une cuvette de direction 17, bien visible sur Fig.3, comprenant un manchon 18 avec le filetage intérieur 16 et une jupe 19 écartée radialement du manchon 18 et déterminant un logement annulaire 20 pour le roulement 8. La jupe 19 se raccorde à la partie supérieure de la cuvette 17 par une paroi tronconique 21.

Le roulement 8 comporte une bague inférieure 8a en appui sur le siège 12 et une bague supérieure 8b présentant, radialement vers l'intérieur, une surface tronconique 22 évasée vers le haut, venant en appui contre un épaulement tronconique 23 prévu sur le manchon 18. Des organes de roulement par exemple des billes, non visibles, sont prévus entre les bagues 8a et 8b.

La partie supérieure de la cuvette 17 forme une collerette qui comporte, intérieurement, une gorge annulaire dans laquelle est logé un joint torique 24 en matière élastomère prévu pour frotter intérieurement contre la surface du pivot 3 et pour freiner en rotation la cuvette 17 relativement au pivot 3. Cet exemple de moyen de freinage en rotation n'est pas limitatif , d'autres moyens connus pouvant être envisagés.

Ceci étant, la réalisation de l'assemblage A, puis le réglage du serrage axial du jeu de direction, sont les suivants.

On fixe, de préférence par collage, la bague filetée 14 à une distance L de l'épaulement 11 de la tête de fourche qui dépend de la taille du cadre et plus précisément de la hauteur k de la colonne 2.

On engage le roulement inférieur 7 autour du pivot 3 et on le fait coulisser en franchissant la bague 14 jusqu'à ce qu'il vienne en appui contre l'épaulement 11. Dans le cas où le diamètre extérieur de la bague 14 serait supérieur au diamètre intérieur du roulement 9, ce dernier serait placé sur l'épaulement 11 avant collage de la bague 14.

Le pivot 3 est ensuite engagé dans la colonne 2 jusqu'à ce que le roulement 9 vienne se placer dans le siège inférieur 10 de la colonne 2. La bague 14 se trouve alors dans la région de l'extrémité haute de la colonne 2, généralement juste au-dessus de cette extrémité, et la partie 3a du pivot dépasse le bord supérieur de la colonne 2.

Le roulement supérieur 8 est engagé autour du pivot 3 et est placé sur le siège supérieur 12 de la colonne 2.

La cuvette de direction 17 est ensuite engagée autour du pivot 3 et descendue par coulissement jusqu'au niveau de la bague 14. La cuvette 17 est mise en rotation pour que son filetage intérieur 16 coopère avec le filetage 13 de la bague 14. Le roulement 8 engagé dans le logement 20 de la cuvette 17 vient en appui, par sa bague supérieure, contre l'épaulement 23.

On procède enfin au serrage du jeu de direction J sous un couple déterminé. L'assemblage cadre-fourche est terminé, avec serrage du jeu de direction réglé.

L'ensemble cadre-fourche peut alors être livré à un détaillant spécialisé qui procèdera au montage de la potence 4 sur le pivot 3 et au réglage de la potence en fonction de la morphologie du cycliste. Lorsque la potence 4 aura été fixée dans la position adéquate, la partie du pivot 3 située au-dessus de la potence sera supprimée par coupe du pivot juste au-dessus de la potence 4.

Le réglage de la potence est dissocié du réglage du jeu de direction. Il en résulte une simplification considérable du travail du détaillant spécialisé et une meilleure maîtrise de la qualité de la direction par un montage et un réglage en usine.

La stabilité dans le temps des réglages effectués est améliorée.

Pour loger la bague 14 sans modifier les composants environnants, il suffit de prévoir un roulement 8 compact permettant de dégager suffisamment d'espace pour le logement de la bague 14. Il serait toutefois possible d'utiliser un roulement 8 de plus fortes dimensions en modifiant les composants environnants.

Bien qu'un filetage soit la solution simple et économique pour réaliser les moyens de liaison conjugués 13 et 16, d'autres solutions équivalentes , telles que rampe hélicoïdale et pion radial coopérant avec la rampe , peuvent être envisagées.

## Revendications

1. Assemblage d'une fourche (1) de bicyclette et d'un jeu de direction (J) sur une colonne de direction (2) de cadre de bicyclette, la fourche étant solidaire d'un pivot (3) qui se prolonge (3a) au-delà de l'extrémité de la colonne de direction éloignée de la fourche pour permettre la fixation d'une potence par serrage extérieur du pivot, le jeu de direction (J) comportant un roulement inférieur (7) et un roulement supérieur (8) disposés entre le pivot et la colonne, tandis qu'un moyen de réglage (M) du serrage axial du jeu de direction est prévu,
- le pivot (3) comportant, dans la région de l'extrémité de la colonne de direction éloignée de la fourche, sur sa surface extérieure une zone (B) munie de premiers moyens de liaison (13), le prolongement (3a) du pivot du côté opposé à la fourche (1) étant dépourvu de tels moyens de liaison,
- et une douille (15) munie de deuxièmes moyens de liaison (16), complémentaires de ceux du pivot, étant prévue pour permettre un réglage du serrage axial du jeu de direction par coopération avec les premiers moyens de liaison,
**caractérisé par le fait que** la zone (B) du pivot munie des premiers moyens de liaison (13) est constituée par une bague (14) de longueur déterminée enfilée autour du pivot et que la bague (14) est fixée par collage au pivot

2. Assemblage selon la revendication 1, **caractérisé par le fait que** la bague (14) comporte un filetage extérieur (13) constituant les premiers moyens de liaison.

3. Assemblage selon la revendication 2, **caractérisé par le fait que** les deuxièmes moyens de liaison sont formés par un filetage interne (16) prévu sur la douille (15) et conjugué de celui (13) de la bague.

4. Assemblage selon l'une des revendications précédentes, **caractérisé par le fait que** le pivot (3) est en matériau composite et la bague (14) rapportée est métallique.

5. Assemblage selon l'une des revendications précédentes, **caractérisé par le fait que** la douille (15) est formée par une cuvette de direction (17).

6. Assemblage selon l'une des revendications précédentes, **caractérisé par le fait qu'** un frein anti-rotation (24) est prévu entre la douille (15) et le pivot (3).

7. Fourche (1) de bicyclette pour un assemblage selon l'une quelconque des revendications 1 à 6, solidaire d'un pivot (3) qui se prolonge (3a) pour permettre la fixation d'une potence par serrage extérieur du pivot, comportant, dans une région éloignée de la fourche, sur sa surface extérieure une zone (B) munie de premiers moyens de liaison (13), le prolongement (3 a) du pivot du côté opposé à la fourche (1) étant dépourvu de tels moyens de liaison, **caractérisée par le fait que** la zone (B) du pivot munie des premiers moyens de liaison (13) est constituée par une bague (14) de longueur déterminée enfilée autour du pivot et fixée par collage à ce dernier.

## Claims

1. An assembly of a bicycle fork (1) and of a steering headset (J) on a steering column (2) of a bicycle frame, the fork being secured to a pivot (3) which is extended (3a) beyond the end of the steering column furthest from the fork to allow the attachment of a handlebar by externally clamping the pivot, the steering headset (J) comprising a lower bearing (7) and an upper bearing (8) which are arranged between the pivot and the column, while an adjusting means (M) for adjusting the axial clamping of the steering headset is provided,
- the pivot (3) comprising, in the region of the end of the steering column furthest from the fork, on its exterior surface, a zone (B) equipped with first connecting means (13), the extension (3a) of the pivot on the opposite side to the fork (1) having no such connecting means,
- and a bushing (15) equipped with second connecting means (16), complementing those of the pivot, being provided to allow the axial clamping of the steering headset to be adjusted by collaboration with the first connecting means,
**characterized in that** the zone (B) of the pivot equipped with the first connecting means (13) consists of a ring (14) of determined length slipped around the pivot and the ring (14) is fixed to the pivot by bonding.

2. The assembly as claimed in Claim 1, **characterized in that** the ring (14) has an external screw thread (13) constituting the first connecting means.

3. The assembly as claimed in Claim 2, **characterized in that** the second connecting means are formed by an internal screw thread (16) provided on the bushing (15) and the conjugate of that (13) of the ring.

4. The assembly as claimed in one of the preceding claims, **characterized in that** the pivot (3) is made of composite and the attached ring (14) is made of metal.

5. The assembly as claimed in one of the preceding claims, **characterized in that** the bushing (15) is formed of a steering cup (17).

6. The assembly as claimed in one of the preceding claims, **characterized in that** a rotation-proofing brake (24) is provided between the bushing (15) and the pivot (3).

7. A bicycle fork (1) for an assembly as claimed in any one of Claims 1 to 6, secured to a pivot (3) which is extended (3a) to allow a handlebar to be attached by external clamping of the pivot, comprising, in a region furthest from the fork, on its exterior surface, a zone (B) equipped with first connecting means (13), the extension (3a) of the pivot on the opposite side to the fork (1) having no such connecting means, **characterized in that** the zone (B) of the pivot equipped with the first connecting means (13) consists of a ring (14) of determined length slipped around the pivot and fixed to the latter by bonding.

## Patentansprüche

1. Anordnung aus einer Fahrradgabel (1) und einem Richtungssteuersatz (J) auf einer Lenksäule (2) eines Fahrradrahmens, wobei die Gabel einstückig mit einem Drehzapfen (3) ausgebildet ist, der über das von der Gabel entfernte Ende der Lenksäule hinaus verlängert ist (3a), um das Anbringen eines Lenkervorbaus durch äußeres Aufspannen des Drehzapfens zu ermöglichen, wobei der Richtungssteuersatz (J) ein unteres Lager (7) und ein oberes Lager (8) umfasst, die zwischen dem Drehzapfen und der Säule angeordnet sind, wobei eine Einrichtung (M) zum Einstellen der axialen Einspannung des Richtungssteuersatzes vorgesehen ist,
- wobei der Drehzapfen (3) im Bereich des von der Gabel entfernten Endes der Lenksäule auf seiner Außenfläche eine Zone (B) aufweist, die mit ersten Verbindungsmitteln (13) versehen ist, wobei die Verlängerung (3a) des Drehzapfens auf der der Gabel (1) entgegengesetzten Seite von derartigen Verbindungsmitteln frei ist,
- und wobei eine Buchse (15), die mit zweiten Verbindungsmitteln (16) versehen ist, welche zu denjenigen des Drehzapfens komplementär sind, vorgesehen ist, um das Einstellen der axialen Einspannung des Richtungssteuersatzes durch Zusammenwirken mit den ersten Verbindungsmitteln zu ermöglichen,
**dadurch gekennzeichnet, dass** die mit den ersten Verbindungsmitteln (13) versehene Zone (B) des Drehzapfens durch eine Hülse (14) mit vorbestimmter Länge gebildet ist, welche auf den Drehzapfen aufgefädelt ist, und dass die Hülse (14) durch Kleben an dem Drehzapfen befestigt ist.

2. Anordnung nach Anspruch 1, **dadurch gekennzeichnet, dass** die Hülse (14) ein Außengewinde (13) aufweist, das die ersten Verbindungsmittel bildet.

3. Anordnung nach Anspruch 2, **dadurch gekennzeichnet, dass** die zweiten Verbindungsmittel durch ein in der Buchse (15) gebildetes und mit demjenigen (13) der Hülse zusammengefügtes Innengewinde (16) gebildet sind.

4. Anordnung nach einem der vorhergehenden Ansprüche, **dadurch gekennzeichnet, dass** der Drehzapfen (3) aus Verbundmaterial besteht und die angesetzte Hülse (14) aus Metall besteht.

5. Anordnung nach einem der vorhergehenden Ansprüche, **dadurch gekennzeichnet, dass** die Buchse (15) durch ein Lenkgehäuse (17) gebildet ist.

6. Anordnung nach einem der vorhergehenden Ansprüche, **dadurch gekennzeichnet, dass** eine Anti-Rotationsbremse (24) zwischen der Buchse (15) und dem Drehzapfen (3) vorgesehen ist.

7. Fahrradgabel (1) für eine Anordnung nach einem der Ansprüche 1 bis 6, die einstückig mit einem Drehzapfen (3), welcher verlängert (3a) ist, um das Befestigen einen Lenkervorbau durch äußeres Einspannen des Drehzapfens zu ermöglichen, verbunden ist, der in einem von der Gabel entfernten Bereich auf seiner Außenfläche eine mit ersten Verbindungsmitteln (13) versehene Zone (B) aufweist, wobei die der Gabel (1) entgegengesetzte Verlängerung (3a) des Drehzapfens von derartigen Verbindungsmitteln frei ist, **dadurch gekennzeichnet, dass** die mit den ersten Verbindungsmitteln (13) versehene Zone (B) des Drehzapfens durch eine Hülse (14) mit vorbestimmter Länge gebildet ist, welche auf den Drehzapfen aufgefädelt und durch Kleben an diesem befestigt ist.
